Europäisches Patentamt

European Patent Office

Office européen des brevets

(11) Publication number: **0 057 306**
**B1**

(12) **EUROPEAN PATENT SPECIFICATION**

(45) Date of publication of patent specification: **07.08.85**

(51) Int. Cl.⁴: **C 22 B 15/12**

(21) Application number: **81300478.5**

(22) Date of filing: **04.02.81**

(54) **Method of disposing of spent organic complexing solutions containing cuprous halides.**

(43) Date of publication of application:
**11.08.82 Bulletin 82/32**

(45) Publication of the grant of the patent:
**07.08.85 Bulletin 85/32**

(84) Designated Contracting States:
**AT BE DE FR GB IT NL SE**

(56) References cited:
**AU-B- 484 130**
**US-A-3 647 843**
**US-A-3 845 188**
**US-A-4 153 452**
**US-A-4 153 669**

(73) Proprietor: **Tenneco Resins, Inc.**
**Park 80 Plaza West-1**
**Saddle Brook New Jersey 07662 (US)**

(72) Inventor: **Christenson, Christopher Paul**
**60 South Shamrock Court**
**Lake Jackson Texas 77566 (US)**
Inventor: **McNamee, Gary Marshall**
**307 Hickory**
**Lake Jackson Texas 77566 (US)**
Inventor: **Delaune, Ralph Henry**
**108 Daisy**
**Lake Jackson Texas 77566 (US)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

Various bimetallic salts and derivatives thereof have been employed in the preparation of scavengers or complexing agents for various liquid feedstreams containing compounds such as olefins, aromatics and carbon monoxide, as disclosed in US—A—3,592,865, 3,647,843, 3,651,159, 3,754,047 and 3,755,487. One of the more popular bimetallic salts is cuprous aluminium tetrahalide ($CuAlX_4$), which generally is prepared by reacting a cuprous halide with an aluminium trihalide in a suitable solvent.

During prolonged use of these complexing agents, particularly when the feedstreams contain olefins and the solvent is an aromatic solvent such as toluene, these agents become contaminated with alkylated aromatics, i.e. the aromatic solvent is alkylated by reaction with the olefins, which changes the boiling point and thereby lowers the efficiency of the recovery process. Disposal of the spent complexing solutions is a problem, because of the cuprous halides which they contain, mostly in the form of $CuAlX_4$, as copper ions are not acceptable in waste treatment bio ponds.

Processes for treating spent complexing solutions so that they can be disposed of without polluting the environment have been disclosed, for instance in US—A—3,845,188 and 4,153,452. In the former, spent solution is treated so as to precipitate cuprous halide in conjunction with hydrolyzed bimetallic salt complex, by adding water, but it is difficult to separate the cuprous halide from the co-precipitated salt complex, making this process impractical for use on an industrial scale. In US—A—4,153,452 copper is recovered from spent complexing solutions by hydrolysis effected by adding acid, which converts the copper halide into a water-soluble form, so that it passes into the aqueous phase of the two-phase mixture resulting from the hydrolysis. The use of acid adds to the environmental problems, however, and also to the overall cost and a need exists for a copper recovery process which is simpler and less expensive and which does not deal with the disposal problem by creating other pollution problems. Therefore, in order to avoid this problem and put these spent complexing solutions into a disposable form, a process has now been discovered for removing the copper from such spent or used complexing solutions, without requiring the use of acids.

According to the present invention, a process is provided for recovering copper metal from a spent cuprous aluminium tetrahalide complexing solution, wherein (1) the complexing solutions subjected to one or more treatment steps such that an organic phase and an aqueous phase are formed, the aqueous phase containing copper in solution as one or more water-soluble copper compounds, (2) the organic phase is separated from the aqueous phase and (3) the aqueous phase is contacted with an environmentally- acceptable metal which is higher in the electromotive series than copper and copper metal is thereby precipitated, characterized in that the organic phase and the aqueous phase are formed by mixing the complexing solution with water in an amount of at least 0.5 parts by weight of water per part by weight of complexing solution and that, before or after the organic phase is separated from the aqueous phase, the resultant mixture comprising a water-insoluble precipitate of cuprous halide, the aqueous phase and, if not yet separated, the organic phase is agitated and contacted with an oxidising agent in a quantity and for a time sufficient to convert the water-insoluble cuprous halide to water-soluble cupric halide, which then becomes incorporated into the aqueous phase.

In carrying out the process of the invention for recovering copper from spent cuprous aluminium tetrahalide solutions, the complexing solution is preferably mixed with 0.5 to 3, and most preferably from 0.95 to 1.05, parts by weight of water per part by weight of the complexing solution, so as to form a mixture of the aqueous phase and the organic phase, containing the cuprous halide. The organic phase can be separated from the aqueous phase before or after the latter is treated with the oxidising agent. According to a preferred feature of the invention, the oxidizing agent is oxygen introduced either in substantially pure form or as air. According to another preferred feature, the oxidizing agent is calcium hypochlorite and the aqueous mixture is acidified to a pH below 7 before or during contact with the calcium hypochlorite.

Cuprous aluminium halide solvent complexes which are particularly suitable for treatment by the process of the present invention include, for example, the chlorides, bromides and iodides, most preferably the chlorides. Suitable solvents include aromatic solvents, for example, benzene, toluene, xylene, ethylbenzene and mixtures thereof, most preferably toluene.

Particularly suitable oxidizing agents include, for example, $O_2$, air, $Cl_2$, $Br_2$, alkali or alkaline earth metal oxyhalides, for example, NaOCl, NaOBr, KOCl, LiOCl, $Ca(OCl)_2$, $Ba(OCl)_2$, $Mg(OCl)_2$ and mixtures thereof. The oxidizing agent is employed in a sufficient quantity to convert substantially all of the $Cu^+$ copper to $Cu^{++}$ copper, so as to render the copper salt soluble in the aqueous phase. Therefore, at least 1 equivalent of oxidizing agent per equivalent of cuprous ion is employed: preferably, use is made of 1 to 5 and most preferably 1.1 to 1.5 equivalents of oxidizing agent per equivalent of cuprous ion.

In some instances, it is desirable to acidify the aqueous mixture slightly so as to lower the pH to below 7, before contacting it with the oxidizing agent, so as to speed up the oxidation process, particularly when oxidizing agents such as the alkali or alkaline earth metal oxyhalides are employed, because they oxidize more efficiently under acidic conditions.

Suitable metals which are acceptable in environmental bio treatment ponds include, for example, Fe, Al, Mg and mixtures thereof, with aluminium being preferred. The quantity of metal used is sufficient to reduce substantially all of the cuprous ($Cu^+$) or cupric ($Cu^{++}$) copper to copper metal; therefore, use is made of at least 1, preferably 1 to 10 and most preferably 1.0 to 2.0 equivalents of metal per equivalent of cuprous or cupric copper ion.

In carrying out the process the spent complexing solution is usually and preferably added to the water, but the water can be added to the solution. Any suitable temperature can be employed; however, a temperature in the range from 0° to 100°C and preferably from 5° to 25°C is particularly suitable.

In the separation step, the aqueous and organic phases can be separated by any known means, for example, methods involving differences in specific gravity, including tilting-plate separation or by the injection of air bubbles in to the phase mixture (air flotation).

The organic phase from the separation step can then be disposed of by any environmentally-acceptable means, such as by burning.

The precipitated copper metal can be recovered by any suitable means, such as filtration, decantation or centrifugation. The resulting aqueous salt-containing stream can then be disposed of by passing it through biotreatment ponds.

The following example is illustrative of the present invention, but is not to be construed as to limiting the scope thereof in any manner.

Example

69.36 g of spent $CuAlCl_4$ . toluene complexing solution, containing 10.25 g (0.1613 moles) of copper was added to a beaker containing 203.13 g of water. At the onset of this addition, the temperature was 6°C and the highest temperature attained during hydrolysis was 47°C. After cooling to room temperature, the mixture was separated into an organic phase and an aqueous phase by means of a separatory funnel. The aqueous phase, containing the undissolved cuprous chloride, was treated with air via a gas dispersion tube while the solution was agitated by a magnetic stirrer. The then solubilized cupric chloride (0.323 equivalents of $Cu^{++}$) was reduced to copper metal by the addition of 4.40 g (0.362 equivalents) of magnesium. The magnesium was added slowly. By filtration, 9.76 g of copper metal was recovered so that the efficiency of copper removal, based upon the amount contained in the spent solution, was 95.22%.

Claims

1. A process for recovering copper metal from a spent cuprous aluminium tetrahalide complexing solution, wherein (1) the complexing solution is subjected to one or more treatment steps such that an organic phase and an aqueous phase are formed, the aqueous phase containing copper in solution as one or more water-soluble copper compounds, (2) the organic phase is separated from the aqueous phase and (3) the aqueous phase is contacted with an environmentally-acceptable metal which is higher in the electromotive series than copper and copper metal is thereby precipitated, characterized in that the organic phase and the aqueous phase are formed by mixing the complexing solution with water in an amount of at least 0.5 part of water per part by weight of complexing solution and that, before or after the organic phase is separated from the aqueous phase, the resultant mixture comprising a water-insoluble precipitate of cuprous halide, the aqueous phase and, if not yet separated, the organic phase is agitated and contacted with an oxidising agent in a quantity and for a time sufficient to convert the water-insoluble cuprous halide to water-soluble cupric halide, which then becomes incorporated into the aqueous phase.

2. A process according to claim 1, wherein the water is mixed with the complexing solution in an amount in the range from 0.5 to 3 parts of water per part by weight of complexing solution and the metal higher in the electromotive series than copper is added in an amount in the range from 1 to 10 equivalents per equivalent of copper.

3. A process according to claim 2, wherein the water is mixed with the complexing solution in an amount in the range from 0.95 to 1.05 parts of water per part by weight of complexing solution and the metal higher in the electromotive series than copper is added in an amount in the range from 1 to 2 equivalents per equivalent of copper.

4. A process according to any preceding claim, wherein the oxidizing agent is oxygen, introduced either in substantially pure form or as air.

5. A process according to any of claims 1 to 3, wherein the oxidizing agent is calcium hypochlorite and wherein the aqueous mixture is acidified to a pH below 7 before or during contact with the calcium hypochlorite.

6. A process according to any preceding claim, wherein the metal higher in the electromotive series than copper is selected from iron, aluminium, magnesium and mixtures thereof.

7. A process according to any preceding claim, wherein the organic phase is separated from the aqueous phase before the mixture comprising the precipitate and the aqueous phase is contacted with the oxidizing agent.

8. A process according to any preceding claim, wherein the complexing solution is cuprous aluminium tetrachloride in toluene.

Revendications

1. Procédé pour récupérer de cuivre métallique d'une solution usée de complexation de tétra-halogénures cuivreux d'aluminium, dans lequel (1) la solution complexante est soumise à une ou plusieurs étapes de traitement de manière à former une phase organique et une phase aqueuse, la phase aqueus contenant du cuivre en solution sous la forme d'un ou plusieurs composés de cuivre hydrosolubles, (2) la phase organique est séparée de la phase aqueuse et (3) la phase aqueus est mise en contact avec un métal acceptable du point de vue de l'environnement, qui se trouve plus haut que le cuivre dans la série électrochimique, et du cuivre métallique est ainsi précipité, caractérisé en ce que la phase organique et la phase aqueuse sont formées par mélange de la solution complexante avec de l'eau en une quantité d'au moins 0,5 partie d'eau par partie en poids de solution complexante et en ce que, avant que la phase organique n'ait été séparée de la phase aqueuse ou après qu'elle l'a été, le mélange résultant comprenant un précipité d'halogénure cuivreux insoluble dans l'eau, la phase aqueuse et, si elle n'a pas encore été séparée, la phase organique, est agité et mis en contact avec un agent oxydant en une quantité et pendant une durée suffisantes pour convertir l'halogénure cuivreux insoluble dans l'eau en halogénure cuivrique soluble dans l'eau, qui s'incorpore alors à la phase aqueuse.

2. Procédé suivant la revendication 1, dans lequel l'eau est mélangée avec la solution complexante en une quantité comprise dans l'intervalle de 0,5 à 3 parties d'eau par partie en poids de solution complexante et le métal plus haut que le cuivre dans la série électrochimique est ajouté en une quantité comprise dans l'intervalle de 1 à 10 équivalents par équivalent de cuivre.

3. Procédé suivant la revendication 2, dans lequel l'eau est mélangée avec la solution complexante en une quantité comprise dans l'intervalle de 0,95 à 1,05 partie d'eau par partie en poids de solution complexante et le métal plus haut que le cuivre dans la série électrochimique est ajouté en une quantité comprise dans l'intervalle de 1 à 2 équivalents par équivalent de cuivre.

4. Procédé suivant l'une quelconque des revendications précédentes, dans lequel l'agent oxydant est l'oxygène, introduit sous une forme pratiquement pure ou sous la forme d'air.

5. Procédé suivant l'une quelconque des revendications 1 à 3, dans lequel l'agent oxydant est l'hypochlorite de calcium et dans lequel le mélange aqueux est acidifié à un pH inférieur à 7 avant ou pendant son contact avec l'hypochlorite de calcium.

6. Procédé suivant l'une quelconque des revendications précédentes, dans lequel le métal plus haut que le cuivre dans la série électrochimique est choisi entre le fer, l'aluminium, la magnésium et leurs mélanges.

7. Procédé suivant l'une quelconque des revendications précédentes, dans lequel la phase organique est séparée de la phase aqueuse que le mélange comprenant le précipité et la phase aqueuse ne soit mis en contact avec l'agent oxydant.

8. Procédé suivant l'une quelconque des revendications précédentes, dans lequel la solution complexante est du tétrachlorure cuivreux d'aluminium dans du toluène.

**Patentansprüche**

1. Verfahren zur Wiedergewinnung von metallischem Kupfer aus einer verbrauchten Kupferaluminiumtetrahalogenid- Komplexierlösung, bei dem (1) Komplexierlösung einem oder mehreren Behandlungsschritten unterworfen wird, so daß eine organische Phase und eine wäßrige Phase gebildet wird, die wäßrige Phase Kupfer in Lösung in form einer oder mehrerer wasserlöslicher Kupferverbindungen enthält, (2) die organische Phase von der wäßrigen Phase abgetrennt wird und (3) die wäßrige Phase mit einem umweltfreundlichen Metal zusammengebracht wird, das in der Spannungsreihe von Metallen über dem Kupger steht und Kupfer ausfällt, dadurch gekennzeichnet, daß die organische Phase und die wäßrige Phase durch Vermischen der Komplexierlösung mit Wasser in einer Menge von mindestens 0,5 Teilen Wasser pro Gewichtsteil Komplexierlösung gebildet wird, und daß vor oder nach dem Abtrennen der organischen Phase von der wäßrigen Phase das erhaltene Gemisch aus einer wasserunlöslichen Fällung von Kupfer(I)-halogenid, der wäßrigen Phase und, sofern noch nicht abgetrennt, der organischen Phase gerührt und mit einem Oxidationsmittel in solcher Menge und so lange zusammengebracht wird, daß das wasserunlösliche Kupfer(I)-halogenid in wasserlösliches (Kupfer(II)-halogenid ungewandelt wird, das sodann in die wäßrige Phase übergeht.

2. Verfahren nach Anspruch 1, dadurch gekennzeichnet, daß man das Wasser mit der Komplexierlösung in einer Menge im Bereich von 0,5 bis 3 Teilen Wasser pro Gewichtsteil Komplexierlösung vermischt und das Metall, das in der Spannungsreihe von Metallen über dem Kupfer Steht, in einer Menge im Bereich von 1 bis 10 Äquivalent pro Äquivalent Kupfer zusetzt.

3. Verfahren nach Anspruch 2, dadurch gekennzeichnet, daß das Wasser mit der Komplexierlösung in einer Menge im Bereich von 0,95 bis 1,05 Teilen Wasser pro Gewichtsteil Komplexierlösung vermischt wird und das Metall, das in der Spannungsreihe von Metallen über dem Kupfer steht, in einer Menge im Bereich von 1 bis Äquivalenten pro Äquivalent Kupfer zugesetzt wird.

4. Verfahren nach einem der vorhergehenden Ansprüche, dadurch gekennzeichnet, daß das Oxidationsmittel Sauerstoff ist, das entweder in praktisch reiner Form oder in Form von Luft zugegeben wird.

5. Verfahren nach einem der Ansprüche 1 bis 3, dadurch gekennzeichnet, daß das Oxidationsmittel Calciumhypochlorit ist und das wäßrige Gemisch vor oder während des Kontakts mit dem Calciumhypochlorit auf einen pH-Wert unterhalb 7 angesäuert wird.

6. Verfahren nach einem der vorhergehenden Ansprüche, dadurch gekennzeichnet, daß das Metall, das in der Spannungsreihe von Metallen über dem Kupfer steht, Eisen oder Aluminium oder Magnesium oder deren Gemische ist.

7. Verfahren nach einem der vorhergehenden Ansprüche, dadurch gekennzeichnet, daß die organische Phase von der wäßrigen Phase abgetrennt wird, bevor das die Fällung enthaltende Gemisch und die wäßrige Phase mit dem Oxidationsmittel zusammengebracht werden.

8. Verfahren nach einem der vorhergehenden Ansprüche, dadurch gekennzeichnet, daß die Komplexierlösung Kupfer(I)aluminiumtetrachlorid in Toluol ist.